(19) Europäisches Patentamt / European Patent Office / Office européen des brevets

(11) **EP 4 286 883 A1**

(12) **EUROPÄISCHE PATENTANMELDUNG**

(43) Veröffentlichungstag:
**06.12.2023 Patentblatt 2023/49**

(21) Anmeldenummer: **22020443.2**

(22) Anmeldetag: **14.09.2022**

(51) Internationale Patentklassifikation (IPC):
*G01S 7/35* (2006.01)  *G01S 13/00* (2006.01)
*G01S 13/90* (2006.01)  *G01S 13/88* (2006.01)
*G01S 13/95* (2006.01)

(52) Gemeinsame Patentklassifikation (CPC):
**G01S 7/354; G01S 13/003; G01S 13/882;
G01S 13/9058; G01S 13/955**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **02.06.2022 AT 1152022**

(71) Anmelder: **Beyond Gravity Austria
1120 Wien (AT)**

(72) Erfinder: **Fragner, Heinrich
A-3100 St. Pölten (AT)**

(74) Vertreter: **Keschmann, Marc
Haffner und Keschmann Patentanwälte GmbH
Schottengasse 3a
1010 Wien (AT)**

(54) **KOMPENSATIONSVERFAHREN ZUR ERLANGUNG PHASENKOHÄRENTER STANDBILDER BEI EINEM BISTATISCHEM RADAR**

(57)     Verfahren zur Verortung eines sich auf einer Oberfläche befindlichen Punkts P unter Verwendung eines bistatischen Radars mit wenigstens einem Sender und wenigstens einem Empfänger, wobei der Punkt P eine relative Bewegung zum Sender und/oder Empfänger aufweist, umfassend:

Ermitteln der Weglänge des Messsignals entlang des Signalpfads während einer Messdauer $\Delta t$,

Kompensieren der sich auf Grund der relativen Bewegung des Punkts P zum Sender und/oder Empfänger während der Messdauer $\Delta t$ ändernden Laufzeit des Messsignals unter Verwendung der sich während der Messdauer $\Delta t$ ändernden Weglänge,

wobei der Punkt P sich an einem definierten Punkt relativ zu, vorzugsweise zwischen, den Endpunkten A und B einer Linie L befindet, wobei der eine Endpunkt A der Reflexionspunkt des Messsignals ist, an dem der Einfallswinkel am Anfang der Messdauer $\Delta t$ gleich dem Ausfallswinkel ist, und der andere Endpunkt B der Reflexionspunkt des Messsignals ist, an dem der Einfallswinkel am Ende der Messdauer $\Delta t$ gleich dem Ausfallswinkel ist.

Fig. 3

**Beschreibung**

Die Erfindung betrifft ein Verfahren zur Verortung eines sich auf einer Oberfläche befindlichen Punkts P unter Verwendung eines bistatischen Radars mit wenigstens einem Sender und wenigstens einem Empfänger, wobei der Punkt P eine relative Bewegung zum Sender und/oder Empfänger aufweist.

Ein Verfahren der eingangs genannten Art wird insbesondere zur Vermessung beispielsweise der Erdoberfläche unter Verwendung von Satelliten eingesetzt, wobei zumindest zwei Satelliten im Sinne eines bi-statischen Radars verwendet werden. Dies bedeutet, dass ein Satellit als Sender und ein weiterer Satellit als Empfänger dient, wobei der Sender ein elektromagnetisches Messsignal aussendet, welches von der zu vermessenden Oberfläche reflektiert und in der Folge vom Empfänger empfangen wird. Der Vergleich der Laufzeit des Signals vom Sender über die Erdoberfläche zum Empfänger mit einem beispielsweise direkt zum Empfänger gesendeten Signal gestattet es, die vom Messsignal zurückgelegte Strecke zu bestimmen und aufgrund der in jedem Moment bekannten Positionen von Sender und Empfänger die geometrische Lage eines Punktes P auf der Oberfläche zu berechnen. Neben dem Vergleich der Laufzeit kann durch einen Vergleich der Signalform des reflektierten Signales mit dem ursprünglichen Signal auf Oberflächeneigenschaften geschlossen werden.

Auf diese Weise wird insbesondere die Oberfläche der Weltmeere ständig vermessen, um die genaue Höhenlage der Oberfläche der Weltmeere zu bestimmen. Neben der Lage des Punktes P können aber auch Oberflächeneigenschaften der Reflexionsgebiete wie Wellenhöhe, bodennahe Luftströmungen und Feuchtigkeitsgehalt durch Vergleich des reflektierten mit dem originalen Signal ermittelt werden. Dies erlaubt es, die Wärmeverteilung in den Meeren und die Aktivität von globalen Strömungen zu beobachten, was insbesondere in der Klimaforschung immer größere Bedeutung gewinnt.

Um einen ausreichend hohen Signal-Rauschabstand für die Interpretation des Messsignals sicherzustellen, ist es abhängig von sendetechnischen Gegebenheiten notwendig, ein Messsignal über eine gewisse Integrationszeit (Messdauer $\Delta t$) auszusenden und im Empfänger auszuwerten. Da sich der Empfänger und der Sender, bei denen es sich z.B. um nicht geostationäre Satelliten handelt, während der Messdauer $\Delta t$ relativ zur zu vermessenden Oberfläche bewegen, legt das Messsignal vom Sender über die Oberfläche zum Empfänger während der Messdauer unterschiedlich lange Wegstrecken zurück. Aus der genannten Relativbewegung ergibt sich weiters, dass der Reflexionspunkt, an dem der Einfallswinkel gleich dem Ausfallswinkel ist, auf der Oberfläche wandert.

Dies bedingt die Notwendigkeit einer Korrektur im Empfangspfad eines solchen bi-statischen Radars, welches erlaubt, die Radarstrahlen des Senders phasenkohärent zu empfangen. Das Messsignal und das Referenzsignal müssen rechnerisch in Kohärenz gebracht werden, um die Signale miteinander vergleichbar zu machen, damit in der Folge ein Vergleich der Laufzeiten der Signale angestellt werden kann. Um ein phasenkohärentes Empfangssignal zu erhalten, ist es notwendig, während der Messdauer die Positionsänderung von Sender, Empfänger und Reflexionspunkt auf der Oberfläche zu kompensieren. Die Genauigkeit dieser Kompensation muss dabei deutlich unter $\lambda/4$ sein, wobei $\lambda$ die Trägerfrequenzwellenlänge des Messsignals bezeichnet.

Bei glatten Oberflächen ist es ausreichend, die während der Messdauer auftretenden Veränderungen in der Weglänge des reflektierten Signals durch eine sich aus der Wellenausbreitungsgeschwindigkeit ergebende Zeitverzögerung entsprechend dem idealisierten Verlauf des Reflexionspunktes auf der zu vermessenden Oberfläche zu kompensieren. Während dies bei Oberflächen, deren Rauigkeit unterhalb von $\lambda/4$ liegt, beispielsweise bei ruhigen Gewässern oder Eisoberflächen, gut funktioniert, ist dies im Falle einer rauen Oberfläche, wie beispielsweise auf einem Ozean mit entsprechendem Wellengang, nicht geeignet, um eine phasenkohärente Signalakkumulation während der Messdauer zu erhalten. Mit zunehmender Rauigkeit führt die Änderung der Oberflächenform während der Messdauer $\Delta t$ dazu, dass das reflektierte Signals am Ende der Messdauer eine andere Phasenlage aufweist als am Anfang der Messdauer.

Der Erfindung liegt daher die Aufgabe zugrunde, eine rechnerische Kompensation für raue Oberflächen bei dem eingangs genannten Verfahren bereitzustellen, sodass es gelingt, bi-statische Radarmessverfahren zuverlässig zur Vermessung, beispielsweise von Meeresoberflächen, einzusetzen.

Zur Lösung dieser Aufgabe umfasst das Verfahren der eingangs genannten Art zur Verortung eines sich auf einer Oberfläche befindlichen, ortsfesten Punkts P

a) das Aussenden eines auf eine Trägerwelle aufmodulierten Messsignals vom Sender auf die Oberfläche,
b) Empfangen des von der Oberfläche während einer Messdauer $\Delta t$ reflektierten Messsignals im Empfänger,
c) während der Messdauer $\Delta t$ Ermitteln der Laufzeit des Messsignals entlang des Signalpfades vom Empfänger über den Punkt P zum Empfänger,
d) während der Messdauer $\Delta t$ Ermitteln der Weglänge des Messsignals entlang des Signalpfads,
e) Kompensieren der sich auf Grund der relativen Bewegung des Punkts P zum Sender und/oder Empfänger während der Messdauer $\Delta t$ ändernden Laufzeit des Messsignals unter Verwendung der sich während der Messdauer $\Delta t$ ändernden Weglänge,
f) Errechnen der tatsächlichen (inklusive Restfehler) Entfernung des Punkts P von Sender und/oder Empfänger auf Grund der kompensierten Laufzeit und der Signalausbreitungsgeschwindigkeit des Messsignals,

wobei der Punkt P sich an einem definierten Punkt relativ zu, vorzugsweise zwischen, den Endpunkten A und B einer Linie L befindet, wobei der eine Endpunkt A der Reflexionspunkt des Messsignals ist, an dem der Einfallswinkel am Anfang der Messdauer Δt gleich dem Ausfallswinkel ist, und der andere Endpunkt B der Reflexionspunkt des Messsignals ist, an dem der Einfallswinkel am Ende der Messdauer Δt gleich dem Ausfallswinkel ist.

Für die Berechnung wird somit an Stelle der sich während der Messdauer Δt ändernden Reflexionsunkte ein an der Erdoberfläche ortsfester Reflexionspunkt P gewählt, der sich idealerweise aber nicht notwendig zwischen den oben genannten Endpunkten der Linie L liegt. Dadurch, dass ein ortsfester Reflexionspunkt herangezogen wird, können die oben beschriebenen negativen Effekte bezüglich der Phasenverschiebung auf Grund von an verschiedenen Reflexionspunkten unterschiedlicher Oberflächenform vermieden werden. Auf Grund der Relativbewegung von Sender und Empfänger zum ortsfesten Reflexionspunkt P führt das Festhalten des Punkts P während der Messdauer dazu, dass das im Punkt P reflektierte Signal während eines überwiegenden Teils der Messdauer nicht der Hauptkeule entspricht, bei welcher der Ausfallswinkel dem Einfallswinkel entspricht, sondern dass ein Signal vom Empfänger erfasst wird, das an der Oberfläche durch diffuse Reflektion des einfallenden Messsignals entstanden ist. Die Streuung führt dazu, dass die reflektierte Welle zu einer Keule aufgeweitet wird.

Auf Grund der Erfindung können auch längere Messzeiten Δt angewendet werden, die zur Erzielung eines zufriedenstellenden Signal-Rauschabstands notwendig sein können, ohne dass es zu einer Verschiebung der Phasenlage über ein Maß von λ/4 kommt, d.h. einem Viertel der Wellenlänge der Trägerfrequenz.

Vorzugsweise wird Schritt c) derart durchgeführt, dass die Laufzeit des Messsignals entlang des Signalpfades während der gesamten Messdauer Δt kontinuierlich oder in regelmäßigen Abständen ermittelt wird. Die Ermittlung der Laufzeit muss hierbei nicht gleichzeitig mit der Signalerfassung erfolgen, sondern stellt in der Regel einen nachgelagerten Schritt dar, in dem die gespeicherten empfangenen Signale ausgewertet werden.

Analoges gilt für Schritt d). Vorzugsweise wird Schritt d) derart durchgeführt, dass die Weglänge des Messsignals entlang des Signalpfades während der gesamten Messdauer Δt kontinuierlich oder in regelmäßigen Abständen ermittelt wird. Die Ermittlung der Weglänge muss hierbei nicht gleichzeitig mit der Signalerfassung erfolgen, sondern stellt in der Regel einen nachgelagerten Schritt dar, in dem die gespeicherten empfangenen Signale ausgewertet werden.

Bevorzugt umfasst die Ermittlung der Weglänge in Schritt d) die folgenden Schritte:

iii) geometrische Ermittlung der Position des Endpunkts A auf Grund der bekannten Position des Senders und des Empfängers und auf Grund der Laufzeit des Messsignals am Anfang der Messdauer Δt,
ii) geometrische Ermittlung der Position des Endpunkts B auf Grund der bekannten Position des Senders und des Empfängers und auf Grund der Laufzeit des Messsignals am Ende der Messdauer Δt,
iii) Errechnen der Position des ortsfesten Punkts P, der sich vorzugsweise auf der Linie L befindet,
iv) Ermitteln der Länge des Signalpfads vom Empfänger über den Punkt P zum Empfänger als Summe des Abstands zwischen der bekannten Position des Senders zum Punkt P und des Abstands zwischen der bekannten Position des Empfängers zum Punkt P.

In Schritt i) und ii) wird die Position des Endpunkts A bzw. B hierbei an der Stelle ermittelt, an der der Ausfallswinkel am Anfang bzw. am Ende der Messdauer Δt gleich dem Einfallswinkel ist.

Gemäß einer bevorzugten Verfahrensweise befindet sich der Punkt P in der Mitte zwischen den Endpunkten der Linie L.

Bevorzugt ist weiters vorgesehen, dass der Sender und der Empfänger in Satelliten eines globales Navigationssatellitensystems angeordnet sind. Dadurch erfordert das erfindungsgemäße Verfahren keine dezidierten Satelliten, sondern es können die ohnehin vorhandenen Satelliten eines globales Navigationssatellitensystems (z.B. NAVSTAR GPS, Galileo, GLONASS) mitverwendet werden. Als Messsignal wird hierbei das von den genannten Satelliten für Ortsbestimmungszwecke ausgesendete Signal verwendet.

Wie an sich bekannt umfasst die Ermittlung der Laufzeit in Schritt c) den Vergleich des im Empfänger empfangenen Messsignals mit einem Referenzsignal.

Dabei kann das Messsignal im Sender und das Referenzsignal synchron im Empfänger erzeugt werden.

Alternativ kann das Referenzsignal im Sender erzeugt und vom Sender direkt zum Empfänger gesendet werden.

Die Erfindung wird nachfolgend anhand eines in der Zeichnung dargestellten Ausführungsbeispiels näher erläutert. In dieser zeigen Fig. 1 ein Verfahren nach dem Stand der Technik, Fig. 2 eine schematische Darstellung des Reflexionsverhalten an einer rauen Oberfläche und Fig. 3 ein Verfahren nach der vorliegenden Erfindung.

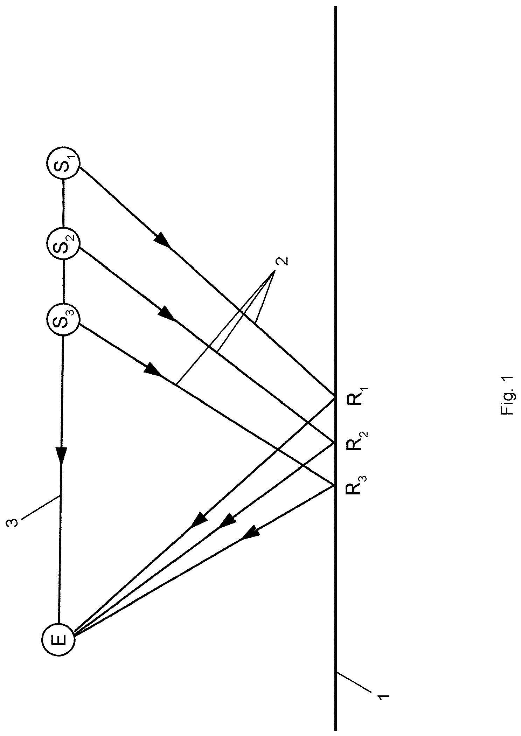

In Fig. 1 wird ein Verfahren nach dem Stand der Technik veranschaulicht, bei dem ein satellitengestütztes bistatisches Radar zum Einsatz gelangt, welches einen als Sender S ausgebildeten Satelliten und einen als Empfänger E ausgebildeten Satelliten umfasst. Die Satelliten sind nicht geostationär und weisen daher eine Relativgeschwindigkeit zur Erdoberfläche 1 auf, die in der in Fig. 1 gezeigten vereinfachten Version als flache Erdoberfläche ausgebildet ist.

Obwohl sowohl der Sender S als auch der Empfänger E eine Relativbewegung zur Erdoberfläche 1 aufweisen, ist in Fig. 1 der Einfachheit und Übersichtlichkeit halber lediglich der Sender in Bewegung dargestellt. Der Sender befindet sich zu einem Zeitpunkt t0 an der Position $S_1$, zu einem Zeitpunkt t1 an der Position $S_2$ und zu einem Zeitpunkt t2 an der Position $S_3$. Die Zeitspanne von t0 bis t2 wird als Messdauer $\Delta t$ bezeichnet, während der die von der Erdoberfläche 1 reflektierten Messsignale im Empfänger E empfangen und ausgewertet werden.

Das Messsignal 2 wird dabei vom Sender S an die Erdoberfläche 1 geschickt, dort reflektiert und vom Empfänger E erfasst. Der Empfänger E wertet das Signal aus, indem er es mit einem Referenzsignal 3 vergleicht, das auf direktem Weg (d.h. ohne den Umweg der Reflektion an der Erdoberfläche 1) vom Empfänger E empfangen wird. Alternativ kann das Referenzsignal auch im Empfänger E synchron zum Sender S erzeugt werden. Aus der zeitlichen Verschiebung des im Empfänger E empfangenen Messsignals im Vergleich zum Referenzsignal kann eine Laufzeit des Signals ermittelt werden und aus der Laufzeit kann unter Berücksichtigung der bekannten Signalausbreitungsgeschwindigkeit die Weglänge entlang des Signalpfads vom Sender S über den Reflexionspunkt R zum Empfänger E errechnet werden.

Die Positionen des Senders S, des Empfängers E und des Reflexionspunktes R sind zeitlich variabel und werden allgemein als $\vec{s}_s(t), \vec{s}_e(t), \vec{s}_r(t)$ bezeichnet. Die Ortsvektoren des Empfängers E und des Senders S werden bei dieser Anwendung durch die beiden Satelliten festgelegt und sind zu jedem Zeitpunkt bekannt. Der Ort des Reflexionspunktes R an der Erdoberfläche errechnet sich aus der wie oben errechneten Weglänge des Messsignals und aus geometrischen Überlegungen an dem Ort, an dem der Einfallswinkel gleich dem Ausfallswinkel ist. Dabei kann die Weglänge durch die folgende Formel dargestellt werden:

$$s(t) = |\vec{s}_s(t) - \vec{s}_r(t)| + |\vec{s}_r(t) - \vec{s}_e(t)| \qquad \text{(Formel 1)}$$

Generell braucht der Empfänger E ein Messsignal 1 endlicher Zeit um diesen Vergleich mit dem Referenzsignal 2 durchführen zu können. Die erforderliche Messdauer $\Delta t$ ist abhängig vom Signal-Rauschabstand des empfangenen Signals und kann auch als Integrationszeit bezeichnet werden.

Um ein phasenkohärentes Empfangssignal zu erhalten, ist es notwendig in diesem Zeitraum $\Delta t$ die geometrische Veränderung der drei Punkte (Sender S, Empfänger E und Reflexionspunkt R) im Empfänger E zu kompensieren. Gemäß dem Stand der Technik werden die während der Messdauer $\Delta t$ auftretenden Veränderungen in der mit der Formel 1 berechneten Weglänge des reflektierten Signals durch eine sich aus der Wellenausbreitungsgeschwindigkeit ergebende Zeitverzögerung entsprechend dem Verlauf von s(t) kompensiert. Die Kompensation wird üblicherweise im Empfänger E implementiert, kann aber auch im Sender S erfolgen. Die Kompensation der sich ändernden Weglänge wird hierbei kontinuierlich bzw. in regelmäßigen Abständen angepasst, wobei in Fig. 1 exemplarisch lediglich drei Kompensationsstufen dargestellt sind. Am Anfang der Messdauer $\Delta t$ (Position $S_1$ des Senders und Position $R_1$ des Reflexionspunkts) ist die Laufzeit des Messsignals am längsten. Am Ende der Messdauer $\Delta t$ (Position $S_3$ des Senders und Position $R_3$ des Reflexionspunkts) ist die Laufzeit des Messsignals am kürzesten. Dazwischen (Position $S_2$ des Senders und Position $R_2$ des Reflexionspunkts) liegt die Laufzeit zwischen diesen Extremwerten. Die jeweiligen Weglängen s(t0), s(t1) und s(t2) werden mit der Formel 1 ermittelt und die sich auf Grund der Änderung der Weglänge ergebenden Laufzeitunterschiede werden kompensiert.

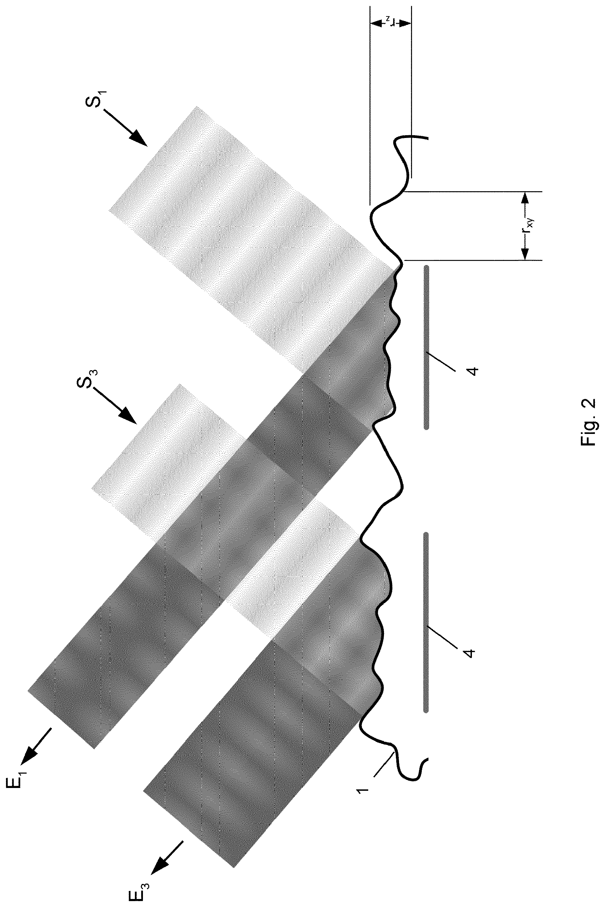

Die oben beschrieben Kompensation funktioniert bei Oberflächen, deren Rauigkeit unterhalb von $\lambda/4$ liegt (ruhige Gewässer, Eisoberflächen). Für den Fall einer rauen Oberfläche, wie beispielsweise auf dem Ozean mit entsprechendem Wellengang, ist durch diese Kompensation eine phasenkohärente Signalakkumulation während der Messdauer $\Delta t$ nicht möglich. Dies ist in Fig. 2 bildlich dargestellt.

Der Reflexionspunkt R hat insbesondere bei rauen Oberflächen eine zunehmende Ausdehnung, d.h. es handelt sich hier um eine Reflexionszone 4 und nicht um einen mathematischen Punkt. Jeder einzelne Punkt innerhalb dieser Zone trägt zur Reflektion der Welle bei. Diese Zone bewegt sich während der Integrationszeit auf der Erdoberfläche weiter. Die unterschiedliche Form der reflektierenden Struktur innerhalb der Zone führt am Ende der Integrationszeit zu einer anderen Phasenlage des reflektierten Signals. Bestimmend für die Änderung der Phasenlage des reflektierten Signals ist bei Oberflächen mit einer Rauigkeit oberhalb von (rz, rxy>$\lambda/4$) die Verschiebung des Reflexionspunktes während der Integrationszeit. Um in diesem Fall die Phasenkohärenz zu behalten, muss die Verschiebung des Reflexionspunktes während der Integrationszeit kleiner als $\lambda/4$ gehalten werden.

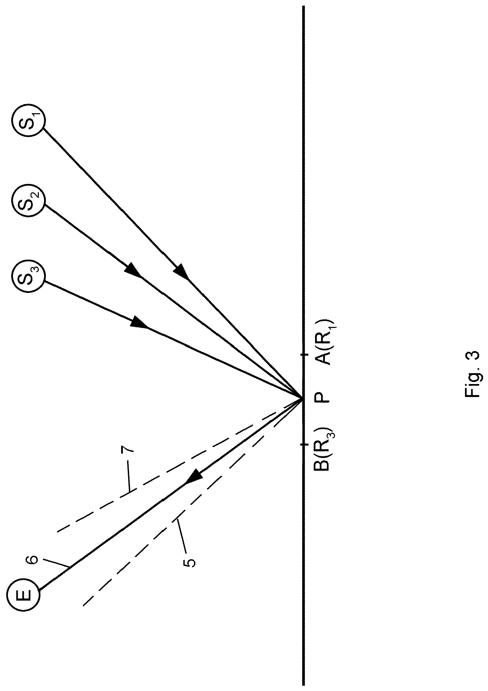

Um diesen Effekt auszunützen, wird die Kompensation der Weglänge des reflektierten Signals (und gegebenenfalls dessen Ableitungen) erfindungsgemäß folgendermaßen abgeändert (siehe Fig. 3):
Für die Berechnung wird an Stelle der sich während der Messdauer $\Delta t$ ändernden Reflexionsunkte ein an der Erdoberfläche ortsfester Reflexionspunkt P gewählt. Ein ortsfester Punkt an der Erdoberfläche erfordert dementsprechend auch die Berücksichtigung der Erddrehung. Idealerweise liegt dieser an jener Stelle der Reflexionszone, wo er in der Mitte des Integrationsintervalls $\Delta t$ auf Grund der Beziehung Einfallswinkel = Ausfallswinkel tatsächlich zu liegen kommt. Dadurch wird in der Formel 1 ein während der Messdauer Δt stetiger Korrekturterm $\vec{s_r}$ verwendet:

$$s(t) = |\vec{s}_s(t) - \vec{s}_r| + |\vec{s}_r - \vec{s}_e(t)|$$

Dabei entspricht der Korrekturterm der fixen Position des Punkts P und für die Kompensation wird die Weglänge des Messsignals von der zeitveränderlichen Position des Senders S über den Punkt P zur zeitveränderlichen Position des Empfängers S herangezogen.

Bei einer kontinuierlichen Aneinanderreihung einzelner Aufnahmen ergibt sich so eine stückweise stetige Annäherung der Formel 1. Der optimale Vektor für den Reflexionspunkt P kann dabei mit folgender Gleichung errechnet werden:

$$\vec{s}_r = \frac{\vec{s}_r(0) + \vec{s}_r(\Delta t)}{2}$$

Dies bedeutet, dass sich der Punkt P in der Mitte zwischen den Punkten A und B ergibt, wobei der Punkt A dem Reflexionspunkt $R_1$ des Messsignals entspricht, an dem der Einfallswinkel am Anfang der Messdauer Δt gleich dem Ausfallswinkel ist, und der Punkt B dem Reflexionspunkt $R_3$ des Messsignals entspricht, an dem der Einfallswinkel am Ende der Messdauer Δt gleich dem Ausfallswinkel ist.

Die Erfindung beruht darauf, dass die Wellen aufgrund der Oberflächenrauhigkeit diffus reflektiert werden. Dadurch wird jede reflektierte Welle zu einer Keule aufgeweitet, deren Maximum in Richtung des Ausfallswinkels α zeigt, der gleich dem Einfallswinkel ist. Weicht der Ausfallswinkel von α ab, so nimmt die Signalamplitude des reflektierten Signals ab. Bleibt die Abweichung vom Winkel α während der Integrationszeit gering, so ist die Reduktion der Signalamplitude ebenfalls sehr gering und kann bei typischen Orbits und Integrationszeiten vernachlässigt werden.

Dadurch, dass für die Berechnung ein an der Erdoberfläche ortsfester Reflexionspunkt P gewählt wird, wird im Empfänger nicht ausschließlich die Hauptkeule des reflektierten Signals erfasst. Am Anfang der Messdauer Δt würde die Hauptkeule des am Punkt P reflektierten Signals nach der Regel Einfallswinkel = Ausfallswinkel der Linie 5 entsprechen. Das tatsächlich erfasste Signal 6 entspricht einer Nebenkeule des am Punkt P reflektierten und gestreuten Signals. Ebenso würde am Ende der Messdauer Δt die Hauptkeule des am Punkt P reflektierten Signals nach der Regel Einfallswinkel = Ausfallswinkel der Linie 7 entsprechen. Das tatsächlich erfasste Signal 6 entspricht jedoch wieder einer Nebenkeule des am Punkt P reflektierten und gestreuten Signals.

Mit dieser Kompensation wird während der Integrationszeiten die Phasenlage jener im Punkt P reflektierten Wellen näherungsweise konstant gehalten und das Signal so aufsummiert, während sich die anderen reflektierten Wellen aufgrund der sich verändernden Phasenlage über die Integrationszeit ausmitteln.

**Patentansprüche**

1. Verfahren zur Verortung eines sich auf einer Oberfläche befindlichen Punkts P unter Verwendung eines bistatischen Radars mit wenigstens einem Sender und wenigstens einem Empfänger, wobei der auf der Erdoberfläche ortsfeste Punkt P eine relative Bewegung zum Sender und/oder Empfänger aufweist, umfassend:

   a) das Aussenden eines auf eine Trägerwelle aufmodulierten Messsignals vom Sender auf die Oberfläche,
   b) Empfangen des von der Oberfläche während einer Messdauer Δt reflektierten Messsignals im Empfänger,
   c) während der Messdauer Δt Ermitteln der Laufzeit des Messsignals entlang des Signalpfades vom Empfänger über den Punkt P zum Empfänger,
   d) während der Messdauer Δt Ermitteln der Weglänge des Messsignals entlang des Signalpfads,
   e) Kompensieren der sich auf Grund der relativen Bewegung des Punkts P zum Sender und/oder Empfänger während der Messdauer Δt ändernden Laufzeit des Messsignals unter Verwendung der sich während der Messdauer Δt ändernden Weglänge,
   f) Errechnen der Entfernung des Punkts P von Sender und/oder Empfänger auf Grund der kompensierten Laufzeit und der Signalausbreitungsgeschwindigkeit des Messsignals,

   wobei der Punkt P sich an einem definierten Punkt relativ zu, vorzugsweise zwischen, den Endpunkten A und B einer Linie L befindet, wobei der eine Endpunkt A der Reflexionspunkt des Messsignals ist, an dem der Einfallswinkel am Anfang der Messdauer Δt gleich dem Ausfallswinkel ist, und der andere Endpunkt B der Reflexionspunkt des Messsignals ist, an dem der Einfallswinkel am Ende der Messdauer $\Delta t$ gleich dem Ausfallswinkel ist.

**2.** Verfahren nach Anspruch 1, **dadurch gekennzeichnet, dass** der Punkt P sich in der Mitte zwischen den Endpunkten der Linie L befindet.

**3.** Verfahren nach Anspruch 1 oder 2, **dadurch gekennzeichnet, dass** der Sender und der Empfänger in Satelliten eines globales Navigationssatellitensystems angeordnet sind.

**4.** Verfahren nach Anspruch 1, 2 oder 3, **dadurch gekennzeichnet, dass** die Ermittlung der Weglänge in Schritt d) die folgenden Schritte umfasst:

i) geometrische Ermittlung der Position des Endpunkts A auf Grund der bekannten Position des Senders und des Empfängers und auf Grund der Laufzeit des Messsignals am Anfang der Messdauer $\Delta t$,
ii) geometrische Ermittlung der Position des Endpunkts B auf Grund der bekannten Position des Senders und des Empfängers und auf Grund der Laufzeit des Messsignals am Ende der Messdauer $\Delta t$,
iii) Errechnen der Position des ortsfesten Punkts P, der sich vorzugsweise auf der Linie L befindet,
iv) Ermitteln der Länge des Signalpfads vom Empfänger über den Punkt P zum Empfänger als Summe des Abstands zwischen der bekannten Position des Senders zum Punkt P und des Abstands zwischen der bekannten Position des Empfängers zum Punkt P.

**5.** Verfahren nach einem der Ansprüche 1 bis 4, **dadurch gekennzeichnet, dass** die Ermittlung der Laufzeit in Schritt c) den Vergleich des im Empfänger empfangenen Messsignals mit einem Referenzsignal umfasst.

**6.** Verfahren nach einem der Ansprüche 1 bis 5, **dadurch gekennzeichnet, dass** das Messsignal im Sender und das Referenzsignal synchron im Empfänger erzeugt wird.

**7.** Verfahren nach einem der Ansprüche 1 bis 5, **dadurch gekennzeichnet, dass** das Referenzsignal im Sender erzeugt und vom Sender direkt zum Empfänger gesendet wird.

Fig. 1

Fig. 2

Fig. 3

Europäisches
Patentamt

European
Patent Office

Office européen
des brevets

**EUROPÄISCHER RECHERCHENBERICHT**

Nummer der Anmeldung

EP 22 02 0443

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JALES P J: "GNSS-Reflectometry: Techniques for Scatterometric Remote Sensing", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24. September 2010 (2010-09-24), Seiten 2761-2770, XP056000380, | 1-5,7 | INV. G01S7/35 G01S13/00 G01S13/90 G01S13/88 G01S13/95 |
| Y | * Seite 2761, linke Spalte - rechte Spalte, Zeile 6 * * Seite 2762, rechte Spalte, Zeile 33 - Zeile 39 * * Seite 2763, linke Spalte, Zeile 21 - rechte Spalte, Zeile 5 * * Seite 2768, rechte Spalte, Zeile 8 - Zeile 12 * * Abbildungen 1-15 * ----- | 6 | |
| Y | JI ZHENYUAN ET AL: "GNSS-Based Passive Radar for Target Detection Algorithm and Experiments", 2021 IEEE INTERNATIONAL GEOSCIENCE AND REMOTE SENSING SYMPOSIUM IGARSS, IEEE, 11. Juli 2021 (2021-07-11), Seiten 8558-8561, XP033984707, DOI: 10.1109/IGARSS47720.2021.9553556 [gefunden am 2021-09-29] | 6 | RECHERCHIERTE SACHGEBIETE (IPC) G01S |
| A | * Seite 8559, linke Spalte, Zeile 28 - rechte Spalte, Zeile 7 * * Abbildungen 1-14 * ----- | 1-5,7 | |

Der vorliegende Recherchenbericht wurde für alle Patentansprüche erstellt

| Recherchenort | Abschlußdatum der Recherche | Prüfer |
|---|---|---|
| München | 3. August 2023 | Köppe, Maro |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument